# EUROPEAN PATENT SPECIFICATION

(11) **EP 2 914 858 B1**
(45) Date of publication and mention of the grant of the patent: **01.01.2020**
(21) Application number: 13850869.2
(22) Date of filing: 31.10.2013
(51) Int. Cl.: F24F 11/30, F24F 110/00, F24F 110/10, F24F 110/20, F24F 120/10, F24F 120/20, F24F 130/20, F24F 11/77, F04D 25/08, F04D 27/00, F04D 29/60, F24F 7/007

(54) **INTEGRATED THERMAL COMFORT CONTROL SYSTEM UTILIZING CIRCULATING FANS**
INTEGRIERTES WÄRMEKOMFORT-STEUERUNGSSYSTEM MIT ZIRKULIERENDEN LÜFTERN
SYSTÈME DE CONTRÔLE DE CONFORT THERMIQUE INTÉGRÉ UTILISANT DES VENTILATEURS BRASSEURS D'AIR

(30) Priority: 31.10.2012 US 201261720679 P; 23.01.2013 US 201361755627 P; 03.04.2013 US 201361807903 P
(43) Date of publication of application: 09.09.2015
(73) Proprietor: Delta T, LLC, Lexington, KY 40511 (US)
(72) Inventor: DESMET, James, M., Louisville, KY 40223 (US); TABER, Christian, R., Lexington, KY 40503 (US); BANKS, David, R., Lexington, KY 40511 (US); HOLLAN, C., Jason, Lexington, KY 40511 (US); SMITH, J., Carey, Lexington, KY 40510 (US); QUINN, Ed, Lexington, KY 40511 (US); LESSER, Thomas, Lexington, KY 40511 (US); SARKISIAN, Dylan, Lexington, Kentucky 40511 (US)
(74) Representative: Wynne-Jones IP Limited
(86) International application number: PCT/US2013/067828
(87) International publication number: WO 2014/071046

(56) References cited:
- WO-A1-2006/111789
- JP-A- H0 861 741
- JP-A- H07 110 165
- JP-A- H10 259 947
- JP-A- 2000 230 742
- JP-A- 2000 303 760
- JP-A- 2003 042 509
- JP-A- 2007 023 912
- JP-A- 2010 101 214
- KR-A- 20050 075 617
- KR-A- 20060 035 237
- US-A- 5 701 750
- US-A1- 2004 065 095
- US-A1- 2008 277 486
- US-A1- 2009 014 545
- US-A1- 2011 189 938
- US-B2- 7 926 299

## Description

### BACKGROUND

A variety of fan systems have been made and used over the years in a variety of contexts. For instance, various ceiling fans are disclosed in U.S. Pat. No. 7,284,960, entitled "Fan Blades," issued October 23, 2007; U.S. Pat. No. 6,244,821, entitled "Low Speed Cooling Fan," issued June 12, 2001; U.S. Pat. No. 6,939,108, entitled "Cooling Fan with Reinforced Blade," issued September 6, 2005; and U.S. Pat. No. D607,988, entitled "Ceiling Fan," issued January 12, 2010. Additional exemplary fans are disclosed in U.S. Pat. Pub. No. 2008/0008596, entitled "Fan Blades," published January 10, 2008; U.S. Pat. Pub. No. 2009/0208333, entitled "Ceiling Fan System with Brushless Motor," published August 20, 2009; and U.S. Pat. Pub. No. 2010/0278637, entitled "Ceiling Fan with Variable Blade Pitch and Variable Speed Control," published November 4, 2010.

It should also be understood that a fan may include sensors or other features that are used to control, at least in part, operation of a fan system. For instance, such fan systems are disclosed in U.S. Pat. Pub. No. 2009/0097975, entitled "Ceiling Fan with Concentric Stationary Tube and Power-Down Features," published April 16, 2009; U.S. Pat. Pub. No. 2009/0162197, entitled "Automatic Control System and Method to Minimize Oscillation in Ceiling Fans," published June 25, 2009;
U.S. Pat. Pub. No. 2010/0291858, entitled "Automatic Control System for Ceiling Fan Based on Temperature Differentials," published November 18, 2010, and U.S. Provisional Patent App. No. 61/165,582, entitled "Fan with Impact Avoidance System Using Infrared," filed April 1, 2009. Alternatively, any other suitable control systems/features may be used in conjunction with embodiments described herein.

Automatic control devices for heating, ventilation and air conditioning systems ("HVAC") in homes and other structures may be used to activate or deactivate an air heating or cooling system and its associated air delivery blowers in response to commands from a control module/logic executing an procedure based on data from one or more air dry bulb (and/or wet bulb) temperature sensors located within the structure. For example, US2004/065095 describes an HVAC system including an air circulation system for circulating air to and from a plurality of thermal zones. A thermostat is provided in each zone and a controller controls individual zone blowers in response to sensed zone temperature. The addition of ceiling fans may improve the efficiency of an HVAC system by circulating the air, thus preventing the formation of pockets of heated or cooled air in locations that do not benefit the occupants, or in which an increased difference between indoor and outdoor temperatures across an exterior wall and roof increases the rate of heat transfer through the surface. Another added benefit of ceiling fans, is that when the circulating air created by the fans comes into contact with human skin, the rate of heat transfer away from the human body increases, thus generating a cooling effect which allows for more efficient use of the HVAC system during periods of cooling. However, in general practice, the circulating fans operate independently of the HVAC system, rather than automatically working in close coordination with it. The fans may be operated continuously, or alternately they may be turned on and off manually; the result can be either that the fans continue to operate and consume power when they are not needed, or that they remain idle at times when their operation might improve the efficiency of the HVAC system.

The examples described herein comprise an integrated thermal comfort control system that utilizes both air circulating fans and an HVAC system in a coordinated fashion, so as to obtain the desired effect of acceptable levels of occupant thermal comfort and adjustment in a manner that minimizes power consumption for any given condition.

While a variety of climate control systems have been made and used, it is believed that no one prior to the inventors has made or used a thermal comfort control system as described herein.

### SUMMARY

The invention pertains to a system for providing thermal comfort in a space comprising a plurality of interconnected zones, comprising:at least one fan for each zone of the space;a sensor for sensing a condition in at least one of the zones; and a controller adapted for controlling a fan independent of another fan based on the sensed condition in the at least one zone; whereby at least one fan is positioned in each zone of the space; said sensor is for sensing an occupancy condition in said at least one of the zones;said controller is adapted for controlling the fan in the at least one zone independent of another fan based on the sensed condition in the at least one zone including the controlled fan; and in that:the at least one fan comprises an overhead fan for circulating air within the space and mounted to a ceiling in a room including the space comprising the plurality of interconnected zones.

The system may further comprise a sensor selected from the group consisting of a temperature sensor, a light sensor, a humidity sensor, a physiological sensor, or any combination thereof. The controller may comprise a master controller for controlling each fan in the space, and the system may also or alternatively include an individual controller for controlling at least one of the fans. For example, the controller may optionally comprise a handheld device controlled by a person in the space.

The system may include an HVAC system for conditioning the space, which HVAC system may be controlled by the controller. The system may further include a plurality of sensors, each for sensing a condition in at least one of the zones. Each sensor may be connected to at least one fan in the zone. Each sensor may be fixedly mounted within the zone other than to the fan.

At least one of the fans further includes a light, and the controller may be adapted to control the light. The system may further include an automated blind, and the controller may be adapted for controlling the automated blind. The fan may include any one or more of a wireless signal booster, a camera, a speaker, a sound generator, an air purifier, a scent generator, or any combination thereof.

The sensor may be adapted for detecting the presence of a particular individual. A device may be carried by an individual and adapted for being detected by the sensor. An individual user may be allowed to control the fan in the at least one zone by transmitting a code to the controller.

The controller may be adapted to determine a control response based upon an average or a particular temperature set range and a thermal and/or occupancy condition in each individual zone. The controller may be adapted to activate or shutdown a fan in any zone depending upon a sensed thermal and/or occupancy condition. The controller may be adapted for controlling an HVAC system for supplying air to the space, and further including one or more automated dampers for automatically diverting air to occupied zones and away from unoccupied zones.

### BRIEF DESCRIPTION OF THE DRAWINGS

While the specification concludes with claims which particularly point out and distinctly claim the invention, it is believed the present invention will be better understood from the following description of certain examples taken in conjunction with the accompanying drawings, in which like reference numerals identify the same elements and in which:
FIG. 1 depicts a perspective view of an exemplary fan having a motor assembly, a hub assembly, a support, a plurality of fan blades, and a mounting system coupled with joists;
FIG. 2 depicts another perspective view of an exemplary fan;
FIG. 3 depicts a perspective view of an exemplary thermal comfort control system utilizing circulating fans;
FIG. 4 depicts a perspective view of a second embodiment of a thermal comfort control system utilizing circulating fans;

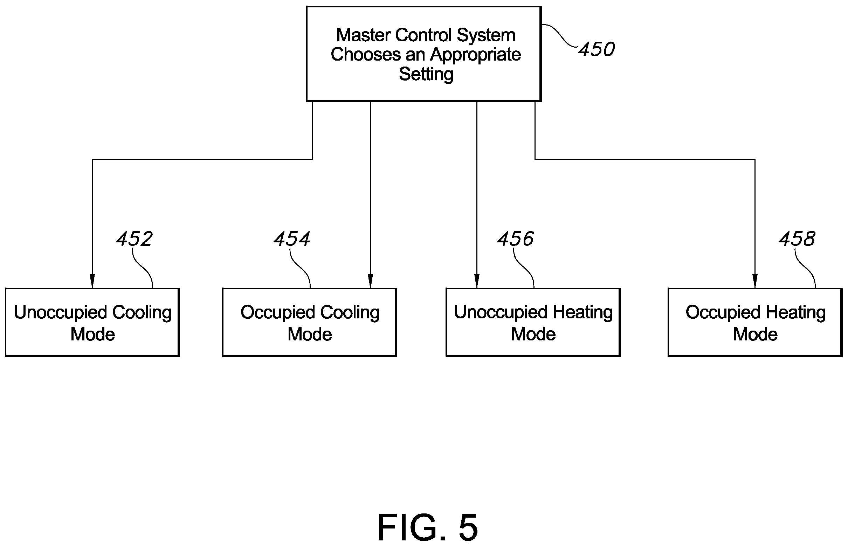

FIG. 5 depicts a flow diagram of an exemplary thermal comfort control process, that utilizes the climate control system of FIG. 3;
FIG. 6 depicts a detailed flow diagram of the exemplary thermal comfort control process of FIG. 4 in which the master control system has automatically chosen the "Occupied Heating" mode;
FIG. 7 depicts a detailed flow diagram of the exemplary thermal comfort control process of FIG. 4 in which the master control system has automatically chosen the "Unoccupied Heating" mode;
FIG. 8 depicts a detailed flow diagram of the exemplary thermal comfort control process of FIG. 4 in which the master control system has automatically chosen the "Occupied Cooling" mode;
FIG. 9 depicts a detailed flow diagram of the exemplary thermal comfort control process of FIG. 4 in which the master control utilizes the "Occupied Cooling" mode according to a second embodiment;
FIG. 10 depicts a detailed flow diagram of the exemplary thermal comfort control process of FIG. 4 in which the master control system has automatically chosen the "Unoccupied Cooling" mode;
FIG. 11 depicts a thermal comfort control system including independently controlled fans positioned in multiple zones in a common space, such as a room.
FIG. 12 depicts a detailed perspective view of the exemplary fan of FIG. 1 having an occupancy sensor mounted to it.
FIG. 13 depicts a detailed perspective view of the exemplary fan of FIG. 1 having a camera mounted to it;
FIG. 14 depicts a detailed perspective view of the exemplary fan of FIG. 1 having a WI-FI device mounted to it; and
FIG. 15 depicts a detailed perspective view of the exemplary fan of FIG. 1 having an audio feature mounted to it.

The drawings are not intended to be limiting in any way, and it is contemplated that various embodiments of the invention may be carried out in a variety of other ways, including those not necessarily depicted in the drawings. The accompanying drawings incorporated in and forming a part of the specification illustrate several aspects of the present invention, and together with the description serve to explain the principles of the invention; it being understood, however, that this invention is not limited to the precise arrangements shown.

### DETAILED DESCRIPTION

The following description of certain examples of the invention should not be used to limit the scope of the claimed invention. Other examples, features, aspects, embodiments, and advantages of the invention will become apparent to those skilled in the art from the following description, which includes by way of illustration, one or more of the best modes contemplated for carrying out the invention. As will be realized, the invention is capable of other different and obvious aspects, all without departing from the invention. Accordingly, the drawings and descriptions should be regarded as illustrative in nature and not restrictive.

### I. Exemplary Fan Overview

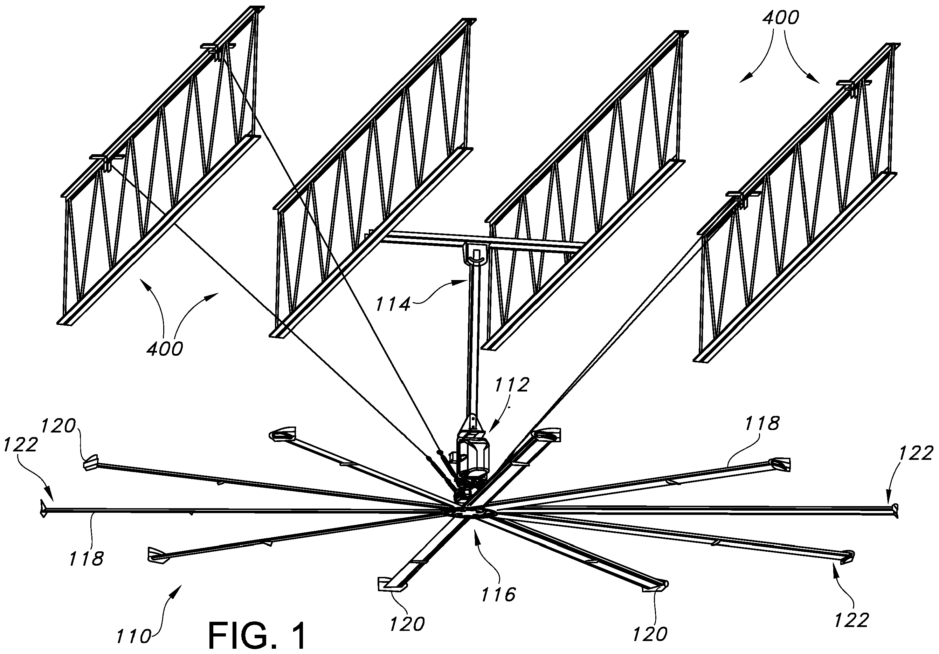

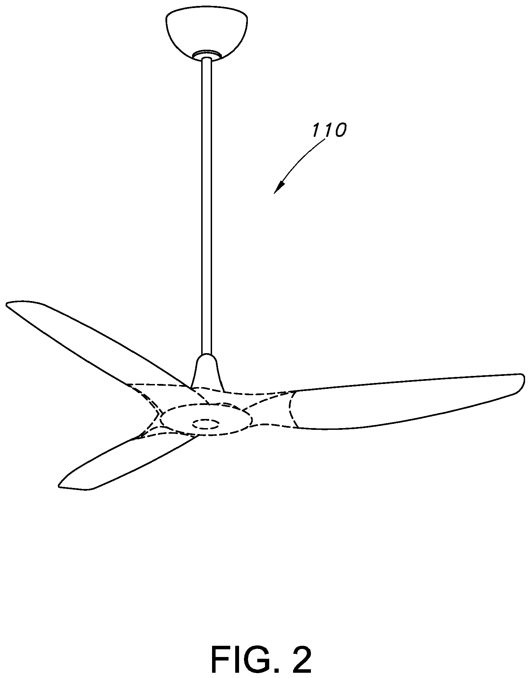

Referring to FIG. 1, a fan (110) of the present example comprises a motor assembly (112), a support (114), a hub assembly (116), and a plurality of fan blades (118). In the present example, fan (110) (including hub assembly (116) and fan blades (118)) has a diameter of greater than about 3 feet and, more specifically, approximately 8 feet. In other variations, fan (110) has a diameter between approximately 6 feet, inclusive, and approximately 24 feet, inclusive. Alternatively, fan (110) may have any other suitable dimensions, such as a 3-7 foot overhead fan having an ornamental design for use in commercial or residential spaces (see FIG. 2), and having a support (114) mounted to the ceiling (C). The particular type of fan (110) used is not considered important to controlling thermal comfort, but the concepts disclosed may have particular applicability to the types of fans for circulating air within a space or room, such as overhead ceiling fans depending from a ceiling with exposed, rotating blades, as shown in the drawings. Any embodiment disclosed herein may be considered to operate in connection with such overhead ceiling fan(s), at a minimum.

Support (114) is configured to be coupled to a surface or other structure at a first end such that fan (110) is substantially attached to the surface or other structure. As shown in FIG. 1, one such example of a structure may be a ceiling joist (400). Support (114) of the present example comprises an elongate metal tube-like structure that couples fan (110) to a ceiling, though it should be understood that support (114) may be constructed and/or configured in a variety of other suitable ways as will be apparent to one of ordinary skill in the art in view of the teachings herein. By way of example only, support (114) need not be coupled to a ceiling or other overhead structure, and instead may be coupled to a wall or to the ground. For instance, support (114) may be positioned on the top of a post that extends upwardly from the ground. Alternatively, support (114) may be mounted in any other suitable fashion at any other suitable location. This includes, but is not limited to, the teachings of the patents, patent publications, or patent applications cited herein. By way of example only, support (114) may be configured in accordance with the teachings of U.S. Pat. Pub. No. 2009/0072108, entitled "Ceiling Fan with Angled Mounting," published March 19, 2009. As yet another alternative, support (114) may have any other suitable configuration. Furthermore, support (116) may be supplemented in numerous ways. One merely illustrative example is described in detail below, while other examples and variations will be apparent to those of ordinary skill in the art in view of the teachings herein.

Motor assembly (112) of the present example comprises an AC induction motor having a drive shaft, though it should be understood that motor assembly (112) may alternatively comprise any other suitable type of motor (e.g., a permanent magnet brushless DC motor, a brushed motor, an inside-out motor, etc.). In the present example, motor assembly (112) is fixedly coupled to support (114) and rotatably coupled to hub assembly (100). Furthermore, motor assembly (112) is operable to rotate hub assembly (116) and the plurality of fan blades (118). By way of example only, motor assembly (112) may be constructed in accordance with at least some of the teachings of U.S. Pat. Pub. No. 2009/0208333, entitled "Ceiling Fan System with Brushless Motor," published August 20, 2009. Furthermore, fan (110) may include control electronics that are configured in accordance with at least some of the teachings of U.S. Pat. Pub. No. 2010/0278637, entitled "Ceiling Fan with Variable Blade Pitch and Variable Speed Control," published November 4, 2010. Alternatively, motor assembly (112) may have any other suitable components, configurations, functionalities, and operability, as will be apparent to those of ordinary skill in the art in view of the teachings herein.

Hub assembly (116) may be constructed in accordance with at least some of the teachings of U.S. Pat. Pub. No. 2010/0278637, entitled "Ceiling Fan with Variable Blade Pitch and Variable Speed Control," published November 4, 2010. Alternatively, hub assembly (116) may be constructed in accordance with any of the teachings or other patent references cited herein. Still other suitable ways in which hub assembly (116) may be constructed will be apparent to those of ordinary skill in the art in view of the teachings herein. It should also be understood that an interface component (not shown) may be provided at the interface of each fan blade (118) and hub assembly (116). By way of example only, such an interface component may be configured in accordance with the teachings of U.S. Pat. Pub. No. 2009/0081045, entitled "Aerodynamic Interface Component for Fan Blade," published March 26, 2009. Of course, such an interface component may be omitted if desired.

Fan blades (118) may further be constructed in accordance with some or all of the teachings of any of the patents, patent publications, or patent applications cited herein. For example, fan blades (118) may be configured in accordance with the teachings of U.S. Pat. No. 7,284,960, entitled "Fan Blades," issued October 23, 2007; U.S. Pat. No. 6,244,821, entitled "Low Speed Cooling Fan," issued June 12, 2001; and/or U.S. Pat. No. 6,939,108, entitled "Cooling Fan with Reinforced Blade," issued September 6, 2005. As another merely illustrative example, fan blades (118) may be configured in accordance with the teachings of U.S. Pat. Pub. No. 2008/0008596, entitled "Fan Blades," published January 10, 2008. As yet another merely illustrative example, fan blades (118) may be configured in accordance with the teachings of U.S. Pat. Pub. No. 2010/0104461, entitled "Multi-Part Modular Airfoil Section and Method of Attachment Between Parts," published April 29, 2010.

Alternatively, any other suitable configurations for fan blades (118) may be used in conjunction with the examples described herein. In the present example, fan blades (118) are formed of aluminum through an extrusion process such that each fan blade has a substantially uniform cross section along its length. It should be understood that fan blades (118) may alternatively be formed using any suitable material, or combination of materials, by using any suitable technique, or combination of techniques, and may have any suitable cross-sectional properties or other properties as will be apparent to one of ordinary skill in the art in view of the teachings herein.

Fan blades (118) of the present example may further include a variety of modifications. By way of example only, fan blade (118) of the present example further comprises a winglet (120) coupled to the second end (122) of fan blade (118). Winglets (120) may be constructed in accordance with some or all of the teachings of any of the patents, patent publications, or patent applications cited herein. For instance, winglets (120) may be configured in accordance with at least some of the teachings of U.S. Pat. No. 7,252,478, entitled "Fan Blade Modifications," issued August 7, 2007. As another merely illustrative example, winglets (120) may be configured in accordance with the teachings of U.S. Pat. Pub. No. 2008/0014090, entitled "Cuffed Fan Blade Modifications," published January 17, 2008. As yet another merely illustrative example, winglets (120) may be configured in accordance with the teachings of U.S. Pat. No. D587,799, entitled "Winglet for a Fan Blade," issued March 3, 2009. Of course, any other suitable configuration for winglets (120) may be used as will be apparent to those of ordinary skill in the art in light of the teachings herein.

It should also be understood that winglet (120) is merely optional. For instance, other alternative modifications for fan blades (118) may include end caps, angled airfoil extensions, integrally formed closed ends, or substantially open ends. By way of example only, an angled extension may be added to the free end of each fan blade (118) in accordance with the teachings of U.S. Pat. Pub. No. 2008/0213097, entitled "Angled Airfoil Extension for Fan Blade," published September 4, 2008. Other suitable structures that may be associated with second end (122) of each fan blade (118) will be apparent to those of ordinary skill in the art in view of the teachings herein.

### II. Exemplary Thermal Comfort Control System

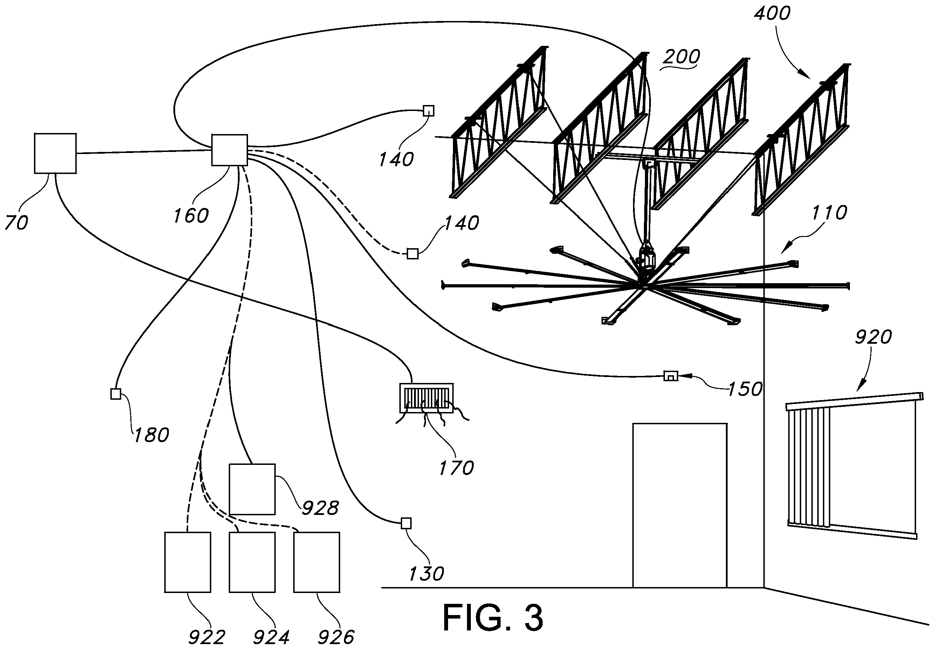

It may be desirable to utilize exemplary fan (110) disclosed above to improve the efficiency of a typical climate control system, thereby creating a thermal comfort control system (100). Exemplary fan (110) described above would improve the efficiency of a typical climate control system by circulating the air, thus preventing the formation of pockets of heated or cooled air in locations that do not benefit the occupants, or in which an increased difference between indoor and outdoor temperatures across an exterior wall and roof increases the rate of heat transfer through the surface. Another added benefit of exemplary fan (110), is that when the circulating air created by fan (110) comes into contact with human skin, the rate of heat transfer away from the human body increases, thus generating a cooling effect which allows for more efficient use of the HVAC system during periods of cooling. By way of example only, an otherwise standard climate control system may further include at least one exemplary fan (110), at least one low-elevation sensor (130), at least one high-elevation sensor (140), at least one occupancy sensor (150), at least one master control system (160), at least one HVAC system (170), and optionally at least one external sensor (180) as shown in FIG. 3.

While exemplary thermal comfort control system (100) is shown as including fan (110) as described above, it should be understood that any other type of fan may be included in exemplary thermal comfort control system (100), including combinations of different types of fans. Such other fans may include pedestal mounted fans, wall mounted fans, or building ventilation fans, among others. It should also be understood that the locations of sensors (130, 140, 150, 180) as shown in FIG. 3 are merely exemplary. Sensors (130, 140, 150, 180) may be positioned at any other suitable locations, in addition to or in lieu of the locations shown in FIG. 3. By way of example only high-elevation sensor (140) may be mounted to a joist, to the fan, to the upper region of a wall, and/or in any other suitable location(s). Various suitable locations where sensors (130, 140, 150, 180) may be located will be apparent to those of ordinary skill in the art in view of the teachings herein. Furthermore, it should be understood that sensors (130, 140, 150, 180) themselves are mere examples. Sensors (130, 140, 150, 180) maybe modified or omitted as desired.

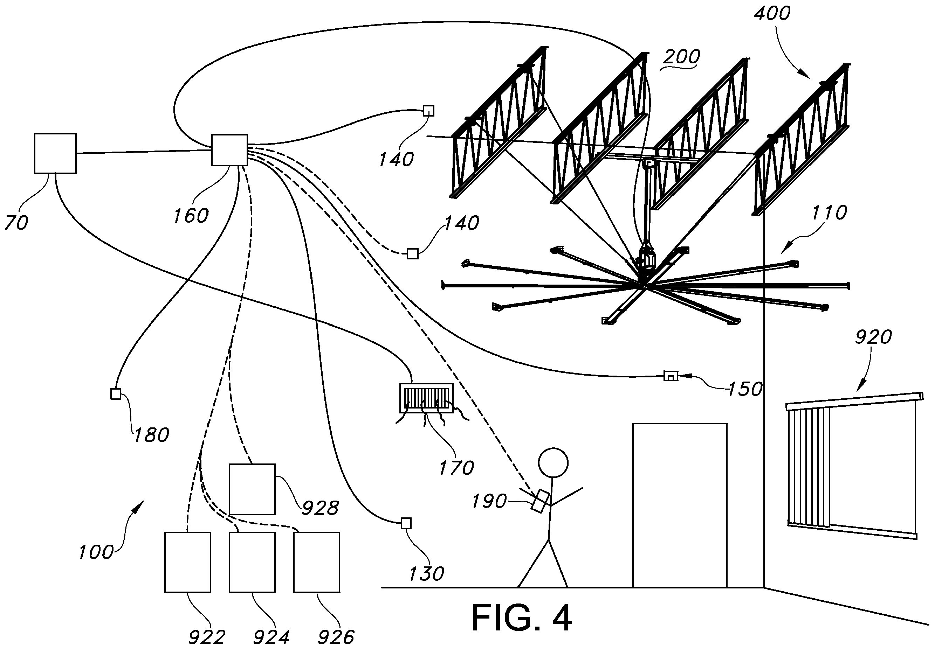

Furthermore, various other kinds of sensors may be used as desired, in addition to or in lieu of one or more of sensors (130, 140, 150, 180). For example, a physiological sensor (190) associated with a user may be used to sense a physiological condition of the user, as illustrated in FIG. 4. The sensed physiological condition may relate to the user's metabolic equivalent of task (MET), heart rate, pulse, blood pressure, body temperature, respiration, weight, perspiration, blood oxygen level, galvanic skin response, or any other physiological condition. By way of example, the physiological sensor (190) may comprise a wearable sensor such as a wristband, armband, belt, watch, glasses, clothing accessory, or any other sensor capable of being worn by the user or attached to the user's body. Additionally, the physiological sensor (190) may comprise an internal sensor, such as a sensor that has been embedded in the user or ingested by the user.

In any embodiment, the physiological sensor (190) may be capable of transmitting data about the user's physiological condition either directly to the master control system (160), or indirectly to the master controller system (160) via an intermediate device. Communication between the physiological sensor (190) and the master controller (160) may be wireless, such as through the use of RF transmissions, Bluetooth, WIFI, or infrared technology. In the case of communication via an intermediate device, said device may comprise a computer or a portable computing device such as a tablet computer, smartphone, or any other device capable of receiving data from the physiological sensor (190) and transmitting said data to the master controller (160).

Furthermore, system (100) may receive information from one or more other sources, including but not limited to online sources. For instance, system (100) may receive one or more temperature values, other values, procedures, firmware updates, software updates, and/or other kinds of information via the internet, through wire or wirelessly. Various suitable ways in which system (100) may communicate with the internet and/or other networks, as well as various types of information that may be communicated, will be apparent to those of ordinary skill in the art in view of the teachings herein.

As shown in FIG. 4, in such an exemplary thermal comfort control system (100), master control system (160) may determine an appropriate comfort control setting (450) based a number of conditions which may include external temperature, room occupancy, and/or time of day, among other factors which may exist. As merely an example of such a comfort control setting determination (450), master control system (160) may choose between "Heating" or "Cooling" based upon the internal and/or external sensed temperature, the master control system may then choose between "Occupied" or "Unoccupied" based upon the sensed occupancy. These conditions, as well as others, may be communicated to master control system (160) by the sensors mentioned above (130, 140, 150, 180, 190) and in a manner described below. Although the appropriate comfort control setting is determined by master control system (160) in exemplary thermal comfort control system (100) described above, other configurations of a thermal comfort control system (100) may allow for an occupant to choose between multiple comfort control settings. The comfort control settings may include, among other settings: "Occupied Heating" mode (458), "Unoccupied Heating" mode (456), "Occupied Cooling" mode (454), and "Unoccupied Cooling" mode (452). Each setting may have a programmable temperature set range associated with it, as well as the option to operate fan (110) as a part of a sequence of operations of HVAC system (170), both in response to the temperature being outside the relevant set range, and also, where appropriate, in response to other conditions such as a difference between the high-elevation temperature and the low-elevation temperature in a particular room as described below.

High-elevation sensor(s) (140) and low-elevation sensor(s) (130) will sense the temperature at various locations throughout a room. The sensors may sense the air-dry bulb temperature, or wet bulb temperature, but do not necessarily have to sense either. High-elevation sensor(s) (140) and low-elevation sensor(s) (130) may also sense relative humidity, air speed, light levels, or other conditions which may exist. Of course, separate dedicated sensors may also be used to sense such other conditions which may exist.

In some versions, detected light levels may factor into control procedures by indicating whether it is sunny outside. For instance, a light sensor (such as, for example, a photocell) may capture ambient light within a room during daylight hours. Accounting for any light from a man-made light source, system (100) may react to light levels indicating significant sunlight reaching a room through one or more windows, such as by increasing cooling effects (such as by regulating the fan speed (e.g., increasing the speed based on more light being detected) and/or activating the HVAC system) during summer time or by reducing heating effects during winter time under the assumption that the sunlight itself will provide at least a perceived heating effect on occupants of the room.

As another merely illustrative example, a light sensor may indicate whether a room is occupied at night (e.g., a lit room at a time associated with night indicates current occupancy or expected occupancy of the room). As yet another merely illustrative example, detected light levels may trigger automated raising or lowering of blinds at windows of a room. Other suitable ways in which light levels may be factored into a control procedure for system (100) will be apparent to those of ordinary skill in the art in view of the teachings herein. Of course, some versions of system (100) may simply lack light sensing capabilities.

As shown in FIG. 3, high-elevation sensor(s) (140) may be located on fan (110), ceiling (200), or elsewhere in a room. Low-elevation sensor(s) (130) may be located at or near the level in which the room will be occupied. Optionally, the exemplary thermal comfort control system may include external sensors (180) that will sense the temperature, relative humidity, barometric pressure, or other conditions that may exist external to the building envelope. Finally, occupancy sensor(s) (150) will sense the presence of occupants within a room. Occupancy sensor(s) (150) may be placed throughout a room, but may be especially effective in places of entry, as shown in FIG. 3. Sensors (130, 140, 150, 180) may be placed in a single room or zone, or may be placed in multiple rooms or zones. Measurements from high-elevation sensor(s) (140), low-elevation sensor(s) (130), external sensor(s) (180), and occupancy sensor(s) (150) may be communicated to the master control system (160). As a merely illustrative example, temperature sensors (130, 140) described above may be configured in accordance with the teachings of U.S. Pat. Pub. No. 2010/0291858, entitled "Automatic Control System For Ceiling Fan Based On Temperature Differentials," published November 18, 2010. Of course, the locations of sensors (130, 140, 150, 180) described above and shown in FIG. 3, are merely exemplary, and any other suitable location may be utilized.

Master control system (160) may include a processor capable of interpreting and processing the information received from sensors (130, 140, 150, 180, 190) to determine when the temperature is outside the relevant set range and also to identify temperature differentials that may exist throughout a room. The processor may also include control logic for executing certain control procedures in order to effectuate an appropriate control response based upon the information (temperature, air speed, relative humidity, etc.) communicated from sensors (130, 140, 150, 180, 190) and the setting automatically chosen by master control system (160) or manually chosen by the occupant. An appropriate control response may be carried out through commands communicated from master control system (160) to fan(s) (110) and/or HVAC system (170) based on the control procedures. By way of example only, fan(s) (110) may be driven through a control procedure that varies fan speed as a function of sensed temperature and humidity. Some such versions may provide a control procedure like the one taught in U.S. Pat. Pub. No. 2010/0291858. In some settings, varying fan speed as a function of sensed temperature and humidity may assist in avoiding condensation on objects within the same room as fan(s) (110); and/or may provide other effects.

As a merely illustrative example, the basis of the control logic may be derived from the thermal comfort equations in ASHRAE Standard 55-2010 and/or other relevant comfort related theory or research. The air speed and perceived temperature, as described below, may be derived from the SET method of ASHRAE Standard 55-2010 and/or other relevant comfort related theory or research. The control logic may incorporate such factors as temperature, relative humidity, air speed, light levels, physiological condition of a user, and/or other conditions which may exist; to determine how to most efficiently achieve acceptable levels of occupant thermal comfort. Master control system (160) may learn the thermal preferences of the occupants during an initial "learning period." Master control system (160) may then apply the control logic to the thermal preferences of the occupant to reduce the energy consumption of HVAC system (170) and fan(s) (110). In the case of the master control system (160) utilizing a measured physiological condition of the user, such as MET, the derivation of relevant parameters according to the SET method and/or other relevant comfort related theory or research may utilize real-time physiological measurements of the user(s) in the space, rather than default settings chosen during an initial set-up period. Accordingly, these derivations may be performed more quickly and more accurately through a more accurate assessment of the environment and system.

Communication between master control system (160), HVAC system (170), fan(s) (110), and various sensors (130, 140, 150, 180, 190) may be accomplished by means of wired or wireless connections, RF transmission, infrared, Ethernet, or any other suitable and appropriate mechanism. Master control system (160) may also be in communication with additional devices (which may include computers, portable telephones or other similar devices) via the Local Area Network, internet, cellular telephone networks or other suitable means, permitting manual override control or other adjustments to be performed remotely. Thermal comfort control system (100) may be controlled by wall-mounted control panels and/or handheld remotes. In some versions, thermal comfort control system (100) may be controlled by a smart light switch, an application on a smart phone, other mobile computing device, or a ZigBee® controller by ZigBee Alliance of San Ramon, CA. Such an application may include on/off, dimming, brightening, and Vacation Mode among other options.

A smart light switch could include sensors (130, 140, 150, 180). Such a smart light switch could be retrofitted within a space to provide information from sensors (130, 140, 150, 180) to master control system (160). A smart light switch may also comprise master control system (160) in addition to or in lieu of sensors (130, 140, 150, 180). Such a smart light switch could be retrofitted within a space to operate as master control system (160) of exemplary thermal comfort control system (100) by controlling any existing HVAC system (170), fan(s) (110), and/or any other climate and environmental control products.

As a merely illustrative example, suppose that master control system (160) had automatically chosen and/or the occupant had manually chosen "Occupied Heating" mode (458), and set the temperature at 70°F. As shown in FIG. 4, if the high-elevation temperature is warmer than the low-elevation temperature, the fan speed may be increased to "Winter Maximum Speed" (512) to circulate the warmer air throughout the room. "Winter Maximum Speed" is 30% of the maximum fan speed (512) in the present example, though it should be understood that any other suitable speed may be used. If however, the high-elevation temperature is cooler than the low-elevation temperature, the fan speed may remain constant at "Winter Minimum Speed" (514) to prevent air pockets from forming throughout the room. The "Winter Minimum Speed" is 15% of the maximum fan speed (514) in the present example, though it should be understood that any other suitable speed may be used. If at any time, low-elevation temperature sensor(s) (130) communicates to master control system (160) that the temperature has fallen to 69.5°F (520), master control system (160) may first compare the high-elevation temperature and low-elevation temperature (510); and if the high-elevation temperature is warmer than the low-elevation temperature, the fan speed may be increased to "Winter Maximum Speed" (512) to circulate the warmer air throughout the room prior to activating HVAC system (170). After allowing suitable time for the warm air to circulate the room, the temperature may again be measured, or continuous measurements may be taken as part of a continuous feedback loop, and an appropriate control response may then be taken by mater control system (160). If at any time, low-elevation temperature sensor(s) (130) communicates to master control system (160) that the temperature has fallen to 69°F (530), master control system (160) will activate HVAC system (170) (532). Of course, any other suitable temperature values may be used in "Occupied Heating" mode (458).

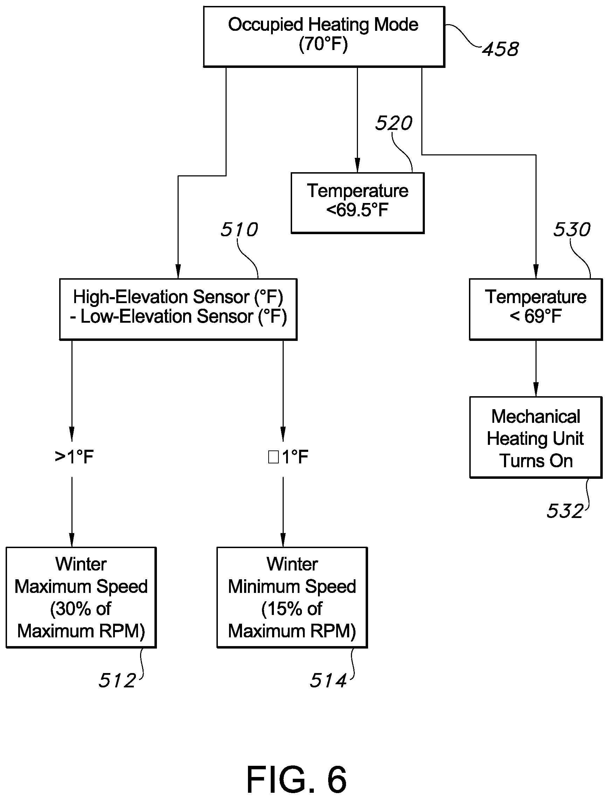

As another merely illustrative example, suppose that master control system (160) had automatically chosen and/or the occupant had manually chosen "Unoccupied Heating" mode (456), and set the temperature at 55°F. As shown in FIG. 6, if the high-elevation temperature is warmer than the low-elevation temperature, the fan speed may be increased to "Winter Maximum Speed" (612) to circulate the warmer air throughout the room. "Winter Maximum Speed" is 30% of the maximum fan speed (612) in the present example, though it should be understood that any other suitable speed may be used. If however, the high-elevation temperature is cooler than the low-elevation temperature, the fan speed may remain constant at "Winter Minimum Speed" (614) to prevent air pockets from forming throughout the room. The "Winter Minimum Speed" is 15% of the maximum fan speed (614) in the present example, though it should be understood that any other suitable speed may be used. If at any time, low-elevation temperature sensor(s) (130) communicates to master control system (160) that the temperature has fallen to 54.5°F (620), master control system (160) may first compare the high-elevation temperature and the low-elevation temperature (610); and if the high-elevation temperature is warmer than the low-elevation temperature, the fan speed may be increased to "Winter Maximum Speed" (612) to circulate the wanner air throughout the room prior to activating HVAC system (170).

After allowing suitable time for the warm air to circulate the room, the temperature may again be measured, or continuous measurements may be taken as part of a continuous feedback loop, and an appropriate control response may then be taken by mater control system (160). If at any time, low-elevation temperature sensor(s) (130) communicates to master control system (160) that the temperature has fallen to 54°F (630), master control system (160) will activate HVAC system (170) (632). Of course, any other suitable temperature values may be used in "Unoccupied Heating" mode (456).

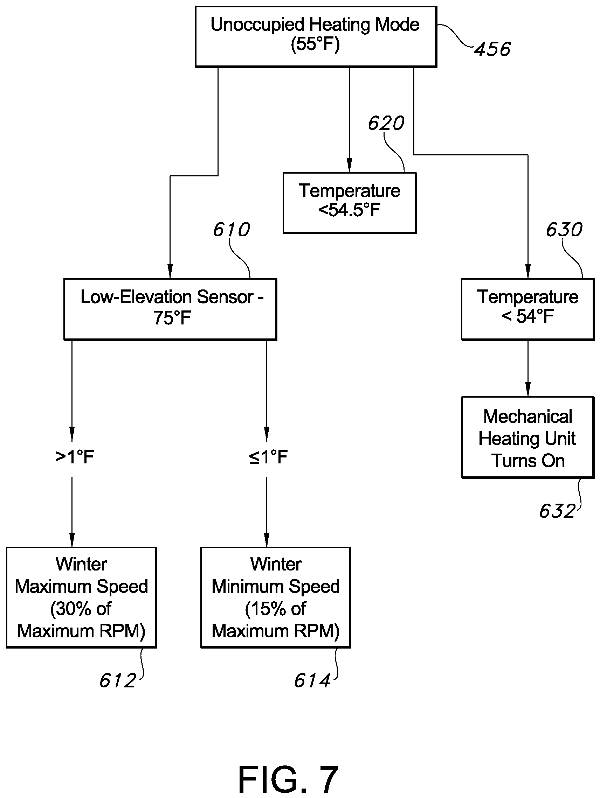

As yet another merely illustrative example, suppose that master control system (160) had automatically chosen and/or the occupant had manually chosen "Occupied Cooling" mode (454), and set the temperature at 80°F and master control system (160) determined the optimum relative humidity to be 55%. As shown in FIG. 7, if low-elevation sensor(s) (130) communicates to master control system (160) that the low-elevation temperature has raised to a point within 5°F of set temperature (710), master control system may activate fan(s) (110). Master control system (160) may increase the speed of fan(s) (110) as the low-elevation temperature approaches set temperature (712, 714, 716, 718, 720, 722) until the fan speed reaches 100% of the maximum fan speed (722), as shown in FIG. 6. The air movement created by fan(s) (110) creates a lower perceived temperature by increasing the rate of heat transfer from the body.

Master control system (160) may adjust the set temperature to a higher actual set temperature that accounts for the perceived cooling effect (724), while maintaining a perceived temperature at the original set temperature, 80°F. The control logic utilized by master control system (160) to determine the perceived temperature may be derived from the SET method of the ASHRAE Standard 55-2010 and/or other relevant comfort related theory or research. The perceived temperature may be based upon the temperature, relative air humidity, and/or air speed, among other conditions which may exist. If the perceived temperature rises above original set temperature (730), then master control system (160) may activate HVAC system (170) (732). If the relative humidity level rises above the optimum relative humidity (740), then master control system (160) may also activate HVAC system (170) (742) (i.e. regardless of what the actual or perceived temperature may be). Of course, any other suitable temperature and/or relative humidity level values and/or fan speeds may be used in "Occupied Cooling" mode (454).

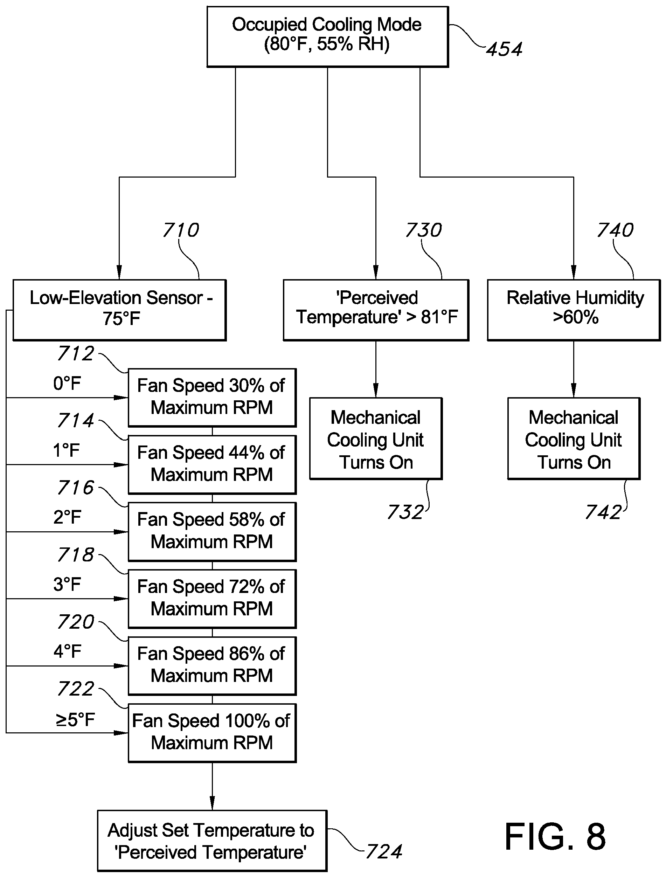

In a similar illustrative example as shown in FIG. 8, the master control system (16) may have automatically chosen and/or the occupant may have manually chosen "Occupied Cooling" mode (454), and set the temperature at 80°F and master control system (160) may have determined the optimum relative humidity to be 55%. In this embodiment, a physiological sensor (190) may communicate to the master control system (160) a value of a physiological condition of a user, such as MET. The physiological sensor (190) may alternately measure one or more of heart rate, pulse, blood pressure, body temperature, respiration, weight, perspiration, blood oxygen level, galvanic skin response, or an accelerometer, or any combination of the foregoing. The sensor may be wearable, and may be positioned on a wristband, armband, belt, watch, glasses, clothing, clothing accessory (e.g., a hat, earring, necklace), or any combination thereof. Alternatively, the sensor may be embedded or ingested.

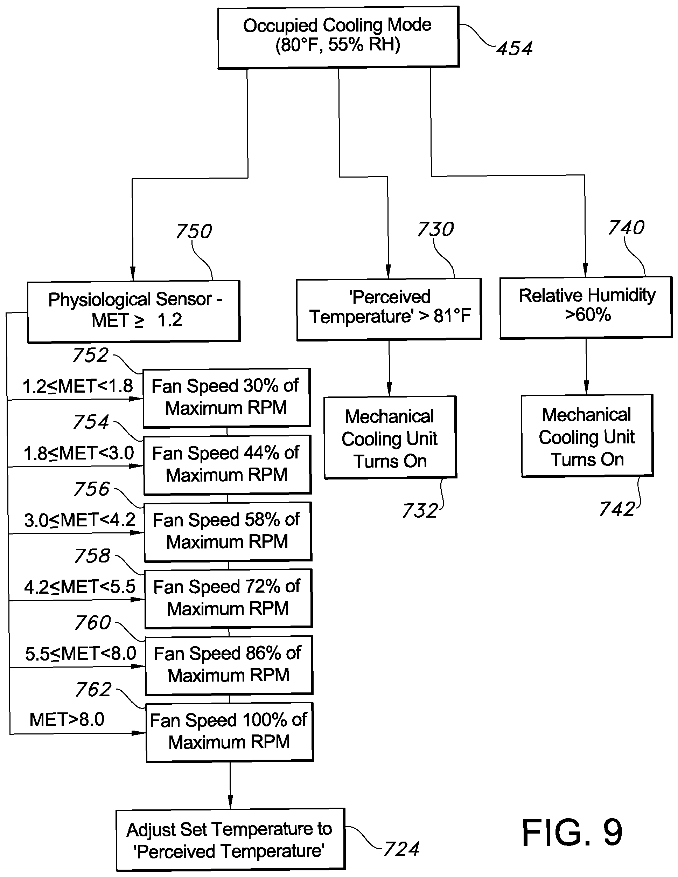

When the physiological sensor (190) communicates to the master control system (160) that the user's condition has exceeded a minimum threshold, such as MET ≥ 1.2 (750), the master controller system may activate fan(s) (110). Master control system (160) may increase the speed of fan(s) (110) as the user's measured MET increases (752, 754, 756, 758, 760, 762) until the fan speed reaches 100) of the maximum fan speed (762), as shown in FIG. 9. The air movement created by fan(s) (110) creates a lower perceived temperature by increasing the rate of heat transfer from the body.

Master control system (160) may adjust the set temperature to a higher actual set temperature that accounts for the perceived cooling effect (724), while maintaining a perceived temperature at the original set temperature, 80°F. The control logic utilized by master control system (160) to determine the perceived temperature may be derived from the SET method of the ASHRAE Standard 55-2010 and/or other relevant comfort related theory or research. The perceived temperature may be based upon the temperature, relative air humidity, and/or air speed, as well as the user's physiological condition, among other conditions which may exist. If the perceived temperature rises above original set temperature (730), then master control system (160) may activate HVAC system (170) (732). If the relative humidity level rises above the optimum relative humidity (740), then master control system (160) may also activate HVAC system (170) (742) (i.e. regardless of what the actual or perceived temperature may be). The use of data from a physiological sensor (190) may be utilized by the master control system (160) alone or in combination with data from any other sensor (130, 140, 150, 180) in adjusting fan speed to account for a change in perceived temperature.

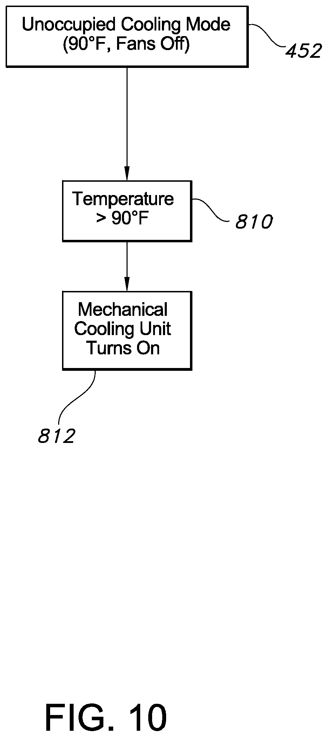

As yet another merely illustrative example, suppose that master control system (160) had automatically chosen and/or the occupant had manually chosen the "Unoccupied Cooling" mode (452), and set the temperature at 90°F. As shown in FIG. 10, fan (110) may remain off even if HVAC system (170) has been activated by master control system (160), because the cooling effect of the air is not useful in an unoccupied room. If the temperature rises above the original set temperature (810), then master control system (160) may activate HVAC system (170) (812). Of course, any other suitable temperature and/or relative humidity level values may be used in "Unoccupied Cooling" mode (452).

Thermal comfort control system (100) could be used in combination with a radiant heating system (e.g. radiant heat flooring, steam pipe radiator systems, etc.) in addition to or in lieu of being used with HVAC system (170). Thermal comfort control system (100) may operate as discussed above to determine and change or maintain the temperature at the level of occupancy within a room. Fans (110) may be utilized to evenly distribute heat from the radiant heat source throughout the entire space. This may improve energy efficiency and decrease warm-up and/or cool-down time within the space.

Thermal comfort control system (100) may be programmed to learn preferences of the occupant over a period of time. As an example of such a capability, master control system (160) may determine, as a result of the occupant's preferences over time, that the occupant prefers a certain relative humidity level in combination with a particular fan speed and/or temperature setting, or vice versa. Such preferences may be established for particular periods of time, for instance during particular times of the year such that master control system (160) may establish different occupancy preferences for different times during the year; or such preferences may be established for particular external conditions which may exist as discussed above such that master control system (160) may establish different occupancy preferences for different external conditions.

A further benefit of exemplary thermal comfort control system (100) is that it may provide zone-based thermal control whereas traditionally an HVAC system (170) is controlled across a multitude of rooms or zones. Sensors (130, 140, 150, 180) may be placed in multiple rooms or zones and the occupant may establish an average temperature set range to be used throughout all the rooms or zones, or the occupant may establish individual temperature set ranges particular to each room or zone.

Master control system (160) may determine appropriate control responses based upon the average or particular temperature set range and the thermal and/or occupancy conditions which may exist in each individual room or zone in which sensors (130, 140, 150, 180) are located. Master control system (160) may activate or shutdown particular fans (110) and/or may activate or shutdown HVAC system (170) in a particular zone or room depending upon the sensed thermal and/or occupancy conditions. Thus, while the average temperature across a zone may not exceed the set range to activate HVAC system (170), fans (110) in occupied rooms may be activated by master control system (160) to increase comfort in those rooms while fans (110) in unoccupied rooms remain idle to reduce power consumption. Automated dampers may also be included within HVAC system (170) to rebalance HVAC system (170) by automatically diverting air to occupied zones and away from unoccupied zones. Such dampers would allow master control system (160) to divert air that would otherwise be wasted on unoccupied zones to those zones which are occupied. The automated dampers may be driven by motors, solenoids, etc. that are in communication with master control system (160). Master control system (160) may be capable of maintaining a lower temperature (in winter) or higher temperature (in summer) in those rooms that are unoccupied, for instance by varying the temperature limit by 2°F-3°F until a room becomes occupied. As described in more detail below, master control system (160) may be integrated with other thermal control products in each room or zone to facilitate more efficient climate control.

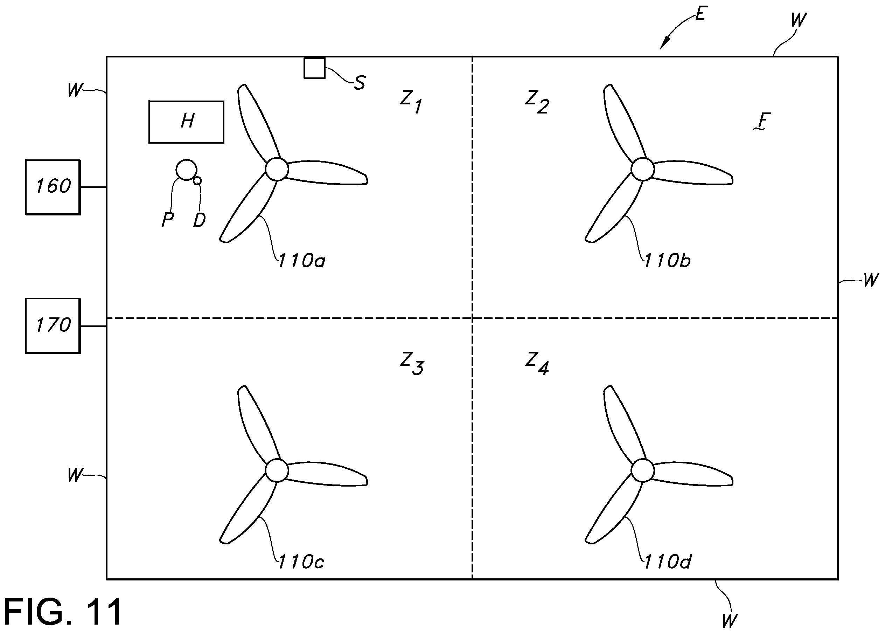

A more specific iteration of zone-based control involves the regulation of the operation of multiple fans co-located within a particular space (S) in a building (G) based on a sensed condition relating to the immediate subspace in which the fan is positioned. Thus, for example, and with reference to FIG. 11, a single space such as a room in a residence, a commercial location (such as a restaurant, retail space), or an industrial location (e.g., a warehouse, manufacturing facility, or the like), may be divided into a plurality of zones (four shown as (Z1), (Z2), (Z3), and (Z4)), each having an associated overhead circulating fan (110a, 110b, 110c, 110d) that may be associated with a separate control (either individually or though a master controller (160)). Two or more of the zones (Z1), (Z2), (Z3), and (Z4) may each be within view of each other by a person in any one of them, and may be bounded by walls (W) (such as external walls), a ceiling (not shown), and a floor (F). The fans may, thus, for example, be mounted to the same ceiling or wall in the space (S).

In the illustrated embodiment, it can be appreciated that at least one wall (W) is common to at least two of the zones (Z1), (Z2), (Z3), and (Z4), but this is not considered to limit the disclosure. Furthermore, partitions may be provided between the zones (Z1), (Z2), (Z3), and (Z4), but for purposes of this aspect of the disclosure, a zone-based control for a single sis not considered to comprise two spaces separated by walls, such as different rooms in a home, apartments in a building, or like arrangements. In one particular embodiment, both the fans and the corresponding zones are located in a single room, but in other embodiments the zones may be in different rooms (such as, for example, the situation where the fans are controlled to operate or not based on detected occupancy within a particular room).

The fans (110a-110d) may be associated with one or more sensors, such as occupancy sensors, and thus may be activated and deactivated based on occupancy in the zone. In a more particular example, the fans (110a-110d) are each associated with sensors for sensing one or more environmental conditions, such as ambient temperature (e.g., a thermostat). The sensors may be directly connected to the fan itself, or may be mounted within the particular zone in which the fan is located (note sensor (R) apart from fan in zone (Z1) of FIG. 11).

Thus, when one of the fans, such as fan (110a), is associated with an active heat load indicated by reference character (H) (which may be a heating element, stove, oven, coffee maker, or other type of machine (e.g., a welder)), its actuation and/or speed may be regulated by a master control system (160) (which may be in wired or wireless communication) in order help comfort any person (P) or persons in the particular zones, or otherwise help to improve the sensed temperature in the zone (such as through destratification). In another zone, such as close to an entrance or exit of the space (S) where outside or unconditioned air may enter, an associated fan (110b) may be independently regulated based on the output of an associated sensor, such as one for detecting local temperature in the zone, or instead based on occupancy (including possibly someone passing through the entrance (E)) or even ambient light (such as that projecting through the entrance or exit (E) aperture or another port or window in the zone). The fans (110c, 110d) in other zones (Z3), (Z4) may also be regulated based on sensed conditions within the particular zones, including possibly based on the temperature difference created by presence of a cooling source, such as a register, open cooler (electric or ice bath), or the like.

As should be appreciated, this zone-based control allows for a microclimate to be maintained in each zone in which one or more fans is located based on locally sensed conditions associated with the particular zone. Accordingly, different fans in different zones may be independently regulated, including possibly using a common master control, to help regulate the conditions within the zone. By way of master controller (160), this feature may also be coupled with the HVAC system (170) to provide for the introduction of conditioned air (hot or cold) to the particular zones using dampers or the like, and may also be coupled with the other features described herein (such as, for example, automated blinds), in order to further optimize these sensed temperature in the zone, and thus assure comfort based on the users.

The master control (160) may include a module, such as a display, for allowing for the control to be undertaken as well. The control (160) may allow for the user to override the independent control of the fans in the space, or require the fans to operate in a certain sequence over time based on sensed condition. The control (160) may also allow for the sensed condition that triggers adjustments in the fan regulation to be controlled, including possibly by causing the fan(s) in the zone(s) to turn on when a certain condition is sensed, turn off when a certain condition is sensed (time, temperature, light, etc.), or otherwise regulate the speed based on sensed conditions.

The comfort control by zones may also be used in connection with individual control, whereby a person in the zone may control the conditions therein, such as by controlling one or more fans in the particular zone. For instance, a person (P) may have a device (D), such as a smart phone, adapted to communicate with either the fan (110) in a particular zone, or with the master controller (160) (but potentially limited to control of a particular fan or fans in the associated zone). Other users in different zones would be similarly able to control the particular zone in which they are positioned, thus ensuring comfort.

While this approach is envisioned primarily in connection with residential or industrial space where a resident, visitor, or worker, is frequently present in the same part of the zone and may thus desired to regulate the temperature, it may also be achieved in commercial spaces, such as for example patrons in a restaurant or coffee shop. To prevent unwanted interference, the person may need to be qualified to implement the control, such as by being provided a code for implementing the control upon registering for such access (possibly as part of a loyalty program). The fan or fans in the zone may then also be used to detect the presence of the person based on the implementation of control (whether code based or otherwise), which can then be used by the establishment to assess the frequency of visits, or perhaps even offer rewards or the like to the customer based on their presence and loyalty.

Another benefit of the exemplary thermal comfort control system (100) is that it may provide scheduled thermal control, whereas traditionally an HVAC system (170) ran around the clock. Master control system (160) may be programmed to operate fans (110) and/or HVAC system (170) only during particular times. An example of such a time may be when the occupant is typically at work. Master control system (160) may also be programmed to determine appropriate control responses based upon different settings or temperature set ranges during particular times. An example of such a time may be when the occupant is sleeping; thermal control system (160) may be programmed to a lower temperature set range (during winter) or a higher temperature set range (during summer) during this time, and then may begin to raise (during winter) or lower (during summer) the temperature at a time just before the occupant typically awakens.

Master control system (160) may also be programmed to operate fans (110) and/or HVAC system (170) only during particular times based on a "room name" that is programmed into master control system (160) and associated with a particular room and a typical occupancy of such a room. As an example of such an operation, a room may be programmed into master control system (160) as "bedroom" and master control system (160) may automatically determine that fans (110) and/or HVAC system (170) need only be operated during typical occupancy periods of a bedroom, for instance, at night when the occupants are typically sleeping. Master control system (160) may also be capable of learning the occupancy habits within particular spaces. For instance, master control system (160) may determine that the occupant typically only uses a particular space during a particular period of time, and therefore only operate fans (110) and/or HVAC system (170) during that particular time to save energy. Finally, master control system (160) may be programmed to only operate fans (110) or HVAC system (170) within occupied zones regardless of the arbitrary location of sensors (130, 140), which may or may not be the same location as the occupied zone.

Thermal comfort control system (100) may also be used to improve the perceived indoor environmental quality (IEQ) by providing efficient air movement during a period of non-occupancy or for a period of time prior to occupancy. Master control system (160) may operate fans (110) and/or HVAC system (170) at a minimal level during the programmed or learned period of non-occupancy. For instance, master control system (160) may be programmed to provide approximately 0.3 m/s (or any other suitable rate) of air movement during the programmed or learned period of non-occupancy. Of course, a 0.3 m/s rate of air movement is just one merely illustrative example, and it should be understood that any other suitable rate of air movement may be provided. There is no intent that system (100) be limited to an air movement rate of 0.3 m/s. Also, master control system (160) may be programmed to begin operation of fans (110) and/or HVAC system (170) for a programmed period of time prior to the programmed or learned period of occupancy begins. For instance, master control system (160) may begin operating fans (110) and/or HVAC system (170) fifteen minutes before the programmed or learned occupancy period begins (e.g. fifteen minutes before master control system (160) expects the space to be occupied, based on typical occupancy periods established for that space). Also, master control system (160) may be programmed to activate a device for cleaning air within a space, such as through an air purifier (e.g., a filtering apparatus, a UV light generator, etc).

Thermal comfort control system (100) may also be utilized to assist in improving the efficiency of artificial lighting within a particular space. Light sensors may be incorporated on or within fans (110) and/or sensors (130, 140, 150, 180) to measure a light level within a particular space. Master control system (160) may be integrated with the artificial lighting within a particular space, and when the light level of a particular space exceeds a predetermined or programmed level, the artificial lighting may be dimmed until the light level reaches the predetermined or programmed level. As discussed below, master control system (160) may be integrated with automated blinds within a particular space, and when the light level of a particular space falls below the predetermined or programmed level, master control system (160) may open the automated blinds to utilize natural lighting, and if necessary, master control system (160) may brighten the artificial lighting until the light level reaches the predetermined or programmed level. Automated blinds could also be automatically opened to assist with heating in winter during the day; or be automatically closed to reduce the cooling load in the summer during the day. Other suitable ways in which automated blinds may be integrated with system (100) will be apparent to those of ordinary skill in the art in view of the teachings herein.

Thermal control system (100) may also be programmed for less routine events, such as vacation ("Vacation Mode"), when, as described above, thermal control system (100) may shutdown fans (110) and/or HVAC system (170) or determine appropriate control responses based upon different settings or temperature set ranges. Such a Vacation Mode or other less routine operations may be manually triggered by the occupant and/or automatically triggered by thermal control system (100) after a lack of occupancy is sensed for an established threshold period. During Vacation Mode, master control system (160) may increase energy efficiency by not operating HVAC system (170) and/or fan(s) (110), or by operating HVAC system (170) and/or fan(s) (110) at more efficient energy levels. As discussed below, such operations may be tied into other any number of climate control products. In addition, system (100) may reset or otherwise reduce power consumption by a water heater and/or other equipment capable of such control during a Vacation Mode.

A further added benefit of thermal comfort control system (100) is that as more utilities companies begin to utilize "peak demand pricing structures" - where the utility will charge various electric rates throughout the day, based on electric grid system demand - thermal comfort control system (100) will be able to receive and react to changes in the utility pricing, based on user defined schedules thereby saving the user money. Master control system (160) may also be programmed to meter or monitor the energy consumption of each fan (110) and HVAC system (170). Master control system (160) may then warn the occupant if HVAC system (170) and/or any particular fan (110) begins to use an atypical amount of energy. In addition or in the alternative, system (100) may generate monthly reports on operating hours and energy use per day, per week, per month, and/or on any other suitable basis. Various other suitable ways in which system (100) may be used to provide energy consumption monitoring and/or metering will be apparent to those of ordinary skill in the art in view of the teachings herein.

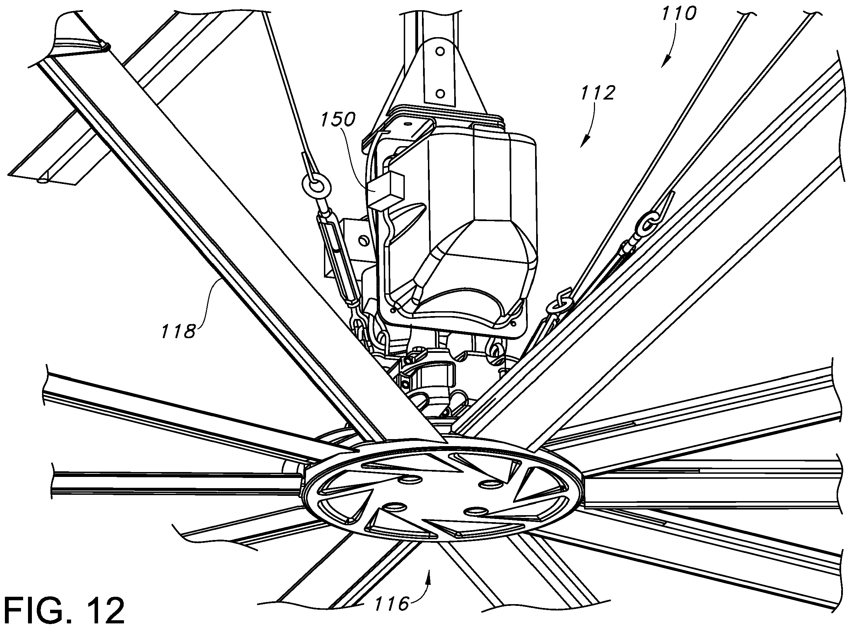

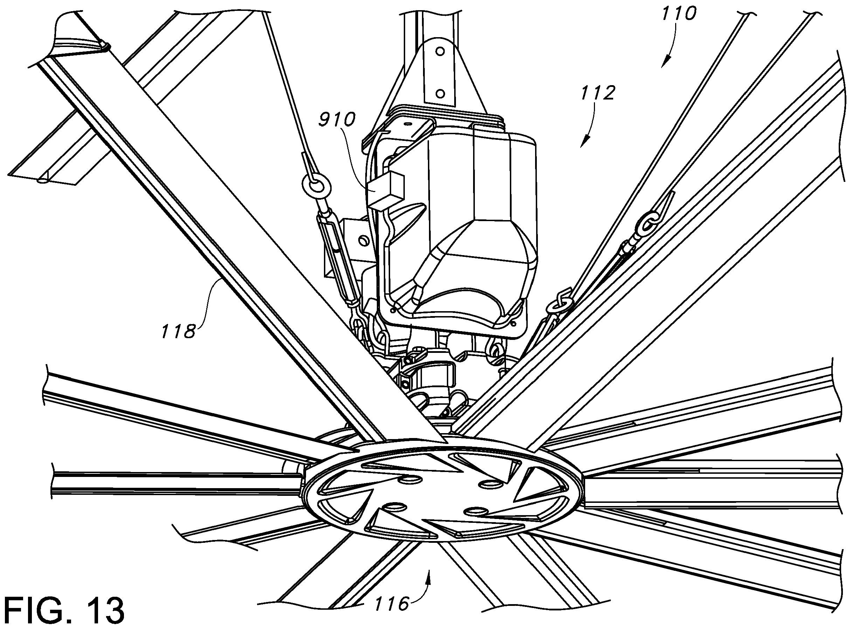

Thermal comfort control system (100) may be utilized as or integrated with a security system. Occupancy sensors (150), placed on fan (110) as shown in FIG. 12, or in other places within a space as shown in FIGS. 1 or 11, may be utilized to detect the presence of a person(s) within a certain range of fan(s) (110), and then trigger a warning signal indicating occupancy. (It should be understood that occupancy sensor (150) could be located anywhere on fan (110), and the representation in FIG. 12 is merely a schematic.) Such a warning may be sent by master control system (160) to a computer and/or smart phone, such as that of the owner of the location where the fan (110) is present. Occupancy sensors (150) may provide the owner with detailed information of a possible intruder's movements by providing the owner with occupancy information in each separate space. Existing occupancy sensors (150) of an existing security system could be utilized by master control system (160) and integrated into thermal comfort control system (100) as discussed above. In addition or in the alternative, occupancy sensors (150) of thermal comfort control system (100) may be utilized by a security system. As discussed below, audio components and/or speakers may be integrated with fans (110) and/or sensors (130, 140, 150, 180) to provide sound and recording capabilities within the space as well. Such capabilities may be utilized during vacation mode only, when the user selects a Security Mode, or all the time. Cameras (910) capable of transferring live video streams via WI-FI may be incorporated on or within fans (110) and/or sensors (130, 140, 150, 180) as shown in FIG. 13. Such cameras (910) would provide the owner with real time video surveillance of each space. Cameras (910) may also be tied into the security system to be utilized as occupancy sensors and/or may be triggered for transmission or recordation of video when the security system detects an occupant. (It should be understood that camera (910) could be located anywhere on fan (110) and/or sensors (130, 140, 150, 180), and the representation in FIG. 13 is merely a schematic.)

Thermal comfort control system (100) may be integrated with a NEST™ thermostat system by Nest Labs, Inc. of Palo Alto, CA. Such integration may allow for the NEST™ thermostat system to receive information from and/or control the components of thermal comfort control system (100); including HVAC system (170), fan(s) (110) and/or sensors (130, 140, 150, 180) among others. Fan(s) (110) and/or sensors (130, 140, 150, 180) may also serve as a gateway into other devices and bring all of those points back to the NEST™ thermostat system. As merely an example of other devices, smart plugs for advanced energy monitoring may be coupled with the NEST™ thermostat system via fans (110) and/or sensors (130, 140, 150, 180). Integration may also allow the programmed or learned periods of occupancy discussed above to be included in the NEST™ thermostat system. Master control system (160) may communicate energy usage to the NEST™ thermostat system. Master control system (160) may also be programmed to operate as a NEST™ thermostat controller in addition to or in lieu of a NEST™ thermostat controller. Fan (110) energy usage, as discussed above, may be communicated to the NEST™ thermostat system. Finally, the operating hours of fan(s) (110), as determined by the programmed or learned period of occupancy as discussed above, may be included in the data logging of the NEST™ thermostat system. As yet another merely illustrative example, thermal comfort control system (100) may be integrated with an IRIS™ system by Lowe's Companies, Inc. of Mooresville, North Carolina. Other suitable systems and/or components that may be combined with system (100) will be apparent to those of ordinary skill in the art in view of the teachings herein.

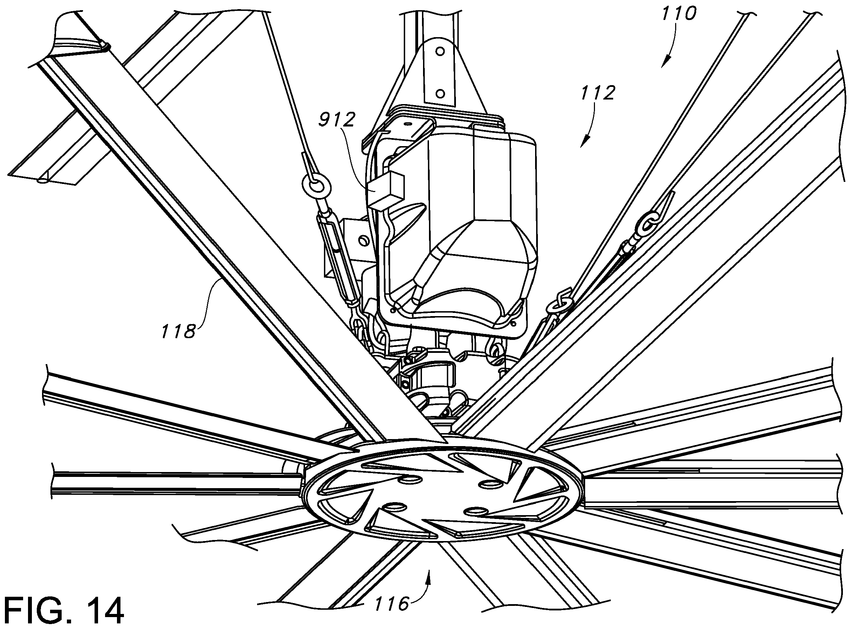

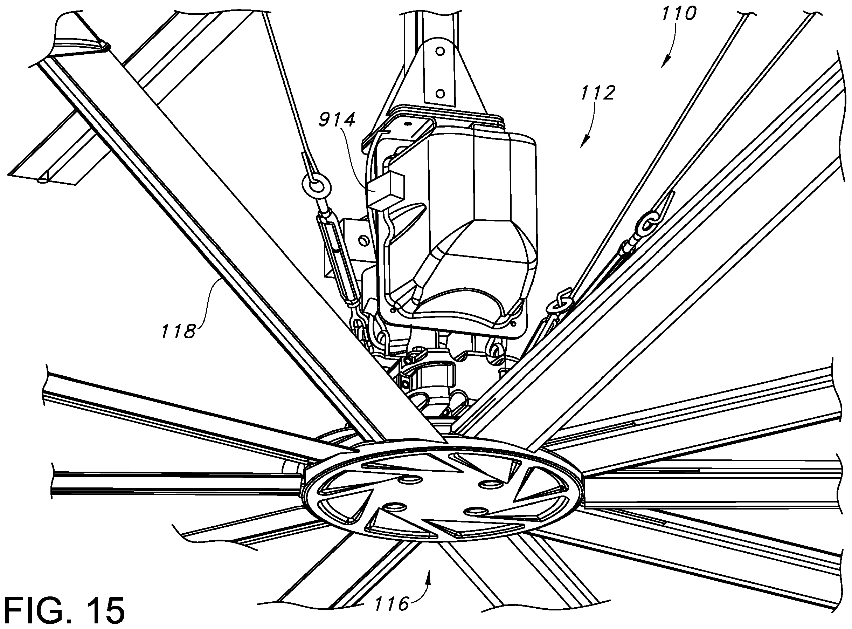

The components of exemplary thermal comfort control system (100) (e.g. fans (110) and/or sensors (130, 140, 150, 180) may also be utilized to perform less traditional functions. For example, fans (110) and/or sensors (130, 140, 150, 180) may serve as an access point or signal booster (912) for Wi-Fi networks within the space as shown in FIG. 14. (It should be understood that access point or signal booster (912) could be located anywhere on fan (110) and/or sensors (130, 140, 150, 180), and the representation in FIG. 14 is merely a schematic.) Such a use may be particularly beneficial in spaces with weak or no Wi-Fi signal. As another example, audio feature(s) (914) may be integrated with fans (110) and/or sensors (130, 140, 150, 180) to provide sound and recording capabilities as shown in FIG. 15. (It should be understood that audio features (914) could be located anywhere on fan (110) and/or sensors (130, 140, 150, 180), and the representation in FIG. 15 is merely a schematic.) Such audio features may include: speakers, microphones, amplifiers, and/or transceivers among others. Audio features (914) may be in communication with an audio program (e.g. iTunes™ by Apple, Inc. of Cupertino, CA, etc.) to play music, etc. Audio features (914) may also be in communication with a security system, to emit audio alarms and/or record audio in response to detection of an intruder, etc.

As shown in FIG. 3, exemplary thermal comfort control system (100) described above may be combined with any number of climate and environmental control products, and the capabilities and operations discussed above may be configured to include any number of climate and environmental control products. An example of such an additional product would be automated blinds (920) that may be opened or closed depending upon the light levels being introduced into the space at any particular moment. Another example of such a product would be an air purifier (922) that may be utilized to improve the air quality within a room based upon air quality measurements taken by sensors (130, 140) described above. Yet another example of such a product would be an air humidifier or dehumidifier (924) to control the relative humidity within a room based upon the relative humidity measurements taken by sensors (130,140). Yet another example of such a product would be a water heater (926). Yet another example of such a product would be a scent generator (928) which may include an air freshener to distribute aromatic scents throughout all the spaces or only particular spaces. Master control system (160) may also be integrated with other network systems that will allow for additional features to be controlled such as lighting and music among others.

Having shown and described various embodiments of the present invention, further adaptations of the methods and systems described herein may be accomplished by appropriate modifications by one of ordinary skill in the art without departing from the scope of the present invention. Several of such potential modifications have been mentioned, and others will be apparent to those skilled in the art. For instance, the examples, embodiments, geometrics, materials, dimensions, ratios, steps, and the like discussed above are illustrative and are not required. Accordingly, the scope of the present invention is defined by the scope of the appending claims.

## Claims

1. A system (100) for providing thermal comfort in a space comprising a plurality of interconnected zones, comprising:
at least one fan (110) for each zone of the space;
a sensor (150) for sensing a condition in at least one of the zones; and
a controller (160) adapted for controlling a fan independent of another fan based on the sensed condition in the at least one zone; **characterized in that**:
at least one fan (110) is positioned in each zone of the space;
said sensor (150) is for sensing an occupancy condition in said at least one of the zones;
said controller (160) is adapted for controlling the fan (110) in the at least one zone independent of another fan based on the sensed condition in the at least one zone including the controlled fan;
and **in that**:
the at least one fan (110) comprises an overhead fan for circulating air within the space and mounted to a ceiling in a room including the space comprising the plurality of interconnected zones.

2. The system of claim 1, further comprising a sensor selected from the group consisting of a temperature sensor, a light sensor, a humidity sensor, a physiological sensor, or any combination thereof.

3. The system of claim 1, wherein the controller (160) comprises a master controller for controlling each fan in the space.

4. The system of claim 1, further including an individual controller for controlling at least one of the fans.

5. The system of claim 4, wherein the controller comprises a handheld device controlled by a person in the space.

6. The system of claim 1, further including an HVAC system (170) for conditioning the space, said HVAC system controlled by the controller (160).

7. The system of claim 1, further including a plurality of sensors (130, 140, 150, 180), each for sensing a condition in at least one of the zones.

8. The system of claim 2, wherein each sensor is connected to at least one fan (110) in the zone.

9. The system of claim 2, wherein each sensor is fixedly mounted within the zone other than to the fan.

10. The system of claim 1, wherein at least one of the fans (110) further includes a light, and wherein the controller is adapted to control the light.

11. The system of claim 1, further including an automated blind, and wherein the controller (160) is adapted for controlling the automated blind.

12. The system of claim 1, wherein at least one fan (110) includes an auxiliary component selected from the group consisting of a wireless signal booster, a camera, a speaker, a sound generator, an air purifier, a scent generator, or any combination thereof.

13. The system of claim 1, wherein the sensor (150) is adapted for detecting the presence of a particular individual.

14. The system of claim 1, further including a device (190) carried by an individual and adapted for being detected by the sensor.

15. The system of claim 1, wherein a user is allowed to control the fan in the at least one zone by transmitting a code to the controller.

16. The system of claim 1, wherein the controller (160) is adapted to determine a control response based upon an average or a particular temperature set range and a thermal and/or occupancy condition in each individual zone.

17. The system of claim 1, wherein the controller (160) is adapted to activate or shutdown a fan in any zone depending upon a sensed thermal and/or occupancy condition.

18. The system of claim 1, wherein the controller (160) is adapted for controlling an HVAC system (170) for supplying air to the space, and further including one or more automated dampers for automatically diverting air to occupied zones and away from unoccupied zones.

## Patentansprüche

1. System (100) zum Bereitstellen von thermischem Komfort in einem Raum, der eine Mehrzahl von miteinander verbundenen Zonen umfasst, das Folgendes umfasst:
wenigstens einen Ventilator (110) für jede Zone des Raums;
einen Sensor (150) zum Erfassen einer Bedingung in wenigstens einer der Zonen; und
eine Steuerung (160), die zum Steuern eines Ventilators unabhängig von einem anderen Ventilator auf der Basis der erfassten Bedingung in der wenigstens einen Zone ausgelegt ist; **dadurch gekennzeichnet, dass**:
wenigstens ein Ventilator (110) in jeder Zone des Raums positioniert ist;
der genannte Sensor (150) zum Erfassen einer Nutzungsbedingung in der genannten wenigstens einen Zone vorgesehen ist;
die genannte Steuerung (160) so ausgelegt ist, dass sie den Ventilator (110) in der wenigstens einen Zone unabhängig von einem anderen Ventilator auf der Basis der erfassten Bedingung in der wenigstens einen Zone, die den gesteuerten Ventilator beinhaltet, steuert;
und dadurch, dass:
der wenigstens eine Ventilator (110) einen Deckenventilator zum Zirkulieren von Luft in dem Raum umfasst und an einer Decke in einem Zimmer montiert ist, das den Raum beinhaltet, der die Mehrzahl von miteinander verbundenen Zonen umfasst.

2. System nach Anspruch 1, das ferner einen Sensor umfasst, der aus der Gruppe bestehend aus einem Temperatursensor, einem Lichtsensor, einem Feuchtigkeitssensor, einem physiologischen Sensor oder einer Kombination davon ausgewählt ist.

3. System nach Anspruch 1, wobei die Steuerung (160) eine Hauptsteuerung zum Steuern jedes Ventilators in dem Raum umfasst.

4. System nach Anspruch 1, das ferner eine individuelle Steuerung zum Steuern wenigstens eines der Ventilatoren beinhaltet.

5. System nach Anspruch 4, wobei die Steuerung ein Handgerät umfasst, das von einer Person in dem Raum bedient wird.

6. System nach Anspruch 1, das ferner ein HVAC-System (170) zum Klimatisieren des Raums umfasst, wobei das genannte HVAC-System von der Steuerung (160) gesteuert wird.

7. System nach Anspruch 1, das ferner eine Mehrzahl von Sensoren (130, 140, 150, 180) jeweils zum Erfassen einer Bedingung in wenigstens einer der Zonen vorgesehen umfasst.

8. System nach Anspruch 2, wobei jeder Sensor mit wenigstens einem Ventilator (110) in der Zone verbunden ist.

9. System nach Anspruch 2, wobei jeder Sensor fest innerhalb der Zone außer am Ventilator montiert ist.

10. System nach Anspruch 1, wobei wenigstens einer der Ventilatoren (110) ferner ein Licht beinhaltet und wobei die Steuerung zum Steuern des Lichts ausgelegt ist.

11. System nach Anspruch 1, das ferner eine automatisierte Jalousie beinhaltet und wobei die Steuerung (160) zum Steuern der automatisierten Jalousie ausgelegt ist.

12. System nach Anspruch 1, wobei wenigstens ein Ventilator (110) eine Hilfskomponente beinhaltet, die aus der Gruppe bestehend aus einem drahtlosen Signalverstärker, einer Kamera, einem Lautsprecher, einem Tonerzeuger, einem Luftreiniger, einem Dufterzeuger oder einer beliebigen Kombination davon ausgewählt ist.

13. System nach Anspruch 1, wobei der Sensor (150) zum Erkennen der Anwesenheit eines bestimmten Individuums ausgelegt ist.

14. System nach Anspruch 1, das ferner eine Vorrichtung (190) beinhaltet, die von einem Individuum getragen wird und zur Erkennung durch den Sensor ausgelegt ist.

15. System nach Anspruch 1, wobei ein Benutzer den Ventilator in der wenigstens einen Zone durch Übermitteln eines Codes an die Steuerung steuern kann.

16. System nach Anspruch 1, wobei die Steuerung (160) so ausgelegt ist, dass sie eine Steuerungsreaktion auf der Basis eines durchschnittlichen oder eines bestimmten Temperatursollwertbereichs und einer thermischen Bedingung und/oder Nutzungsbedingung in jeder individuellen Zone bestimmt.

17. System nach Anspruch 1, wobei die Steuerung (160) so ausgelegt ist, dass sie einen Ventilator in jeder Zone in Abhängigkeit von einer erfassten thermischen Bedingung und/oder Nutzungsbedingung aktiviert oder ausschaltet.

18. System nach Anspruch 1, wobei die Steuerung (160) zum Steuern eines HVAC-Systems (170) zum Zuführen von Luft zu dem Raum ausgelegt ist und ferner eine oder mehrere automatisierte Klappen zum automatischen Umleiten von Luft zu genutzten Zonen und weg von ungenutzten Zonen beinhaltet.

## Revendications

1. Système (100) destiné à fournir un confort thermique dans un espace comprenant une pluralité de zones interconnectées, comprenant :
au moins un ventilateur (110) pour chaque zone de l'espace ;
un capteur (150) destiné à capter un état dans au moins une des zones ; et
un dispositif de commande (160) conçu pour commander un ventilateur indépendant d'un autre ventilateur basé sur l'état capté dans l'au moins une zone ; **caractérisé en ce que** :
au moins un ventilateur (110) est positionné dans chaque zone de l'espace ;
ledit capteur (150) est destiné à capter un état d'occupation dans ladite au moins une des zones ;
ledit dispositif de commande (160) est conçu pour commander le ventilateur (110) dans l'au moins une zone indépendant d'un autre ventilateur sur la base de l'état capté dans l'au moins une zone incluant le ventilateur commandé ;
et **en ce que** :
l'au moins un ventilateur (110) comprend un ventilateur suspendu destiné à faire circuler l'air au sein de l'espace et monté à un plafond dans une pièce incluant l'espace comprenant la pluralité de zones interconnectées.

2. Système selon la revendication 1, comprenant en outre un capteur choisi dans le groupe constitué d'un capteur de température, d'un capteur de lumière, d'un capteur d'humidité, d'un capteur physiologique, ou de toute combinaison de ceux-ci.

3. Système selon la revendication 1, dans lequel le dispositif de commande (160) comprend un dispositif de commande maître destiné à commander chaque ventilateur dans l'espace.

4. Système selon la revendication 1, incluant en outre un dispositif de commande individuel destiné à commander au moins un des ventilateurs.

5. Système selon la revendication 4, dans lequel le dispositif de commande comprend un dispositif portatif commandé par une personne dans l'espace.

6. Système selon la revendication 1, incluant en outre un système de CVC (chauffage, ventilation et climatisation) (170) destiné à climatiser l'espace, ledit système de CVC commandé par le dispositif de commande (160) .

7. Système selon la revendication 1, incluant en outre une pluralité de capteurs (130, 140, 150, 180), chacun destiné à capter un état dans au moins une des zones.

8. Système selon la revendication 2, dans lequel chaque capteur est connecté à au moins un ventilateur (110) dans la zone.

9. Système selon la revendication 2, dans lequel chaque capteur est monté fixement au sein de la zone à un élément autre que le ventilateur.

10. Système selon la revendication 1, dans lequel au moins un des ventilateurs (110) inclut en outre une lumière, et dans lequel le dispositif de commande est conçu pour commander la lumière.

11. Système selon la revendication 1, incluant en outre un store automatisé, et dans lequel le dispositif de commande (160) est conçu pour commander le store automatisé.

12. Système selon la revendication 1, dans lequel au moins un ventilateur (110) inclut un composant auxiliaire choisi dans le groupe constitué d'un amplificateur de signal sans fil, d'une caméra, d'une enceinte, d'un générateur de son, d'un purificateur d'air, d'un générateur de parfum, ou de toute combinaison de ceux-ci.

13. Système selon la revendication 1, dans lequel le capteur (150) est conçu pour détecter la présence d'une personne en particulier.

14. Système selon la revendication 1, incluant en outre un dispositif (190) porté par une personne et conçu pour être détecté par le capteur.

15. Système selon la revendication 1, dans lequel il est permis à un utilisateur de commander le ventilateur dans l'au moins une zone en transmettant un code au dispositif de commande.

16. Système selon la revendication 1, dans lequel le dispositif de commande (160) est conçu pour déterminer une réponse de commande sur la base d'une plage prédéfinie de températures particulières ou moyennes et d'un état thermique et/ou d'occupation dans chaque zone individuelle.

17. Système selon la revendication 1, dans lequel le dispositif de commande (160) est conçu pour activer ou arrêter un ventilateur dans toute zone en fonction d'un état thermique et/ou d'occupation capté.

18. Système selon la revendication 1, dans lequel le dispositif de commande (160) est conçu pour commander un système de CVC (170) destiné à amener de l'air à l'espace, et incluant en outre un ou plusieurs registres d'air automatisés destinés à détourner automatiquement l'air vers les zones occupées et l'éloigner des zones non occupées.
